# EUROPEAN PATENT APPLICATION

(11) **EP 4 510 218 A1**
(43) Date of publication of application: **19.02.2025**
(21) Application number: 24176754.0
(22) Date of filing: 17.05.2024
(51) Int. Cl.: H01M 4/133, H01M 4/134, H01M 4/36, H01M 4/38, H01M 4/587, H01M 10/0525, H01M 4/62, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 16.08.2023 KR 20230106680
(71) Applicant: Samsung SDI Co., Ltd., Yongin-si, Gyeonggi-do 17084 (KR)
(72) Inventor: BAE, Juhye, 17084 Yongin-si (KR); PARK, Jin Seok, 17084 Yongin-si (KR); NAM, Hyun, 17084 Yongin-si (KR); LEE, Taeil, 17084 Yongin-si (KR)
(74) Representative: Marks & Clerk LLP

(57) **Abstract**

A negative electrode for a rechargeable lithium battery and a rechargeable lithium battery including the same are provided. The negative electrode includes a current collector; and a negative active material layer on at least one surface of the current collector, wherein the negative active material layer comprises a first crystalline carbon layer in contact with the current collector, a silicon layer on the first crystalline carbon layer and comprising a Si-carbon composite, and a second crystalline carbon layer on the silicon layer, and a thickness of the silicon layer is about 3% to about 35% based on a total thickness of the negative active material layer.

## Description

### BACKGROUND

### 1. Field

Embodiments of the present disclosure relate to a negative electrode for a rechargeable lithium battery and a rechargeable lithium battery including the same.

### 2. Description of the Related Art

Recently, the rapid expansion in electronic devices, such as mobile phones, laptop computers, and electric vehicles, utilizing batteries has led to surprising increases in the desire and/or demand for rechargeable batteries with relatively high capacity and lighter weight. Accordingly, research into improving the performance of rechargeable lithium batteries is actively being studied.

A rechargeable lithium battery includes a positive electrode and a negative electrode, each of which include an active material capable of intercalating and deintercalating lithium ions, and an electrolyte. A rechargeable lithium battery generates electrical energy due to the oxidation and reduction reactions that occur when lithium ions are intercalated and deintercalated into the positive electrode and the negative electrode.

### SUMMARY

Aspects of one or more embodiments of the present disclosure relate to a negative electrode for a rechargeable lithium battery having low volume expansion and excellent or suitable life cycle characteristic.

Aspects of one or more embodiments of the present disclosure relate to a rechargeable lithium battery including the negative electrode.

Additional aspects will be set forth in part in the description which follows and, in part, will be apparent from the description, or may be learned by practice of the presented embodiments of the disclosure.

According to one or more embodiments of the present disclosure, a negative electrode for a rechargeable lithium battery includes a current collector; and a negative active material layer on at least one surface of the current collector, wherein the negative active material layer includes a first crystalline carbon layer in contact with the current collector, a silicon layer on the first crystalline carbon layer and including a Si-carbon composite, and a second crystalline carbon layer on the silicon layer, and a thickness of the silicon layer is about 3% to about 35% based on a total thickness of the negative active material layer.

According to one or more embodiments, a rechargeable lithium battery includes the negative electrode, a positive electrode including a positive active material, and a non-aqueous electrolyte.

At least some of the above and other features of the invention are set out in the claims.

One or more embodiments of the present disclosure are included in the following detailed description.

The negative electrode for a rechargeable lithium battery according to one or more embodiments may have relatively low volume expansion during charging and discharging and excellent or suitable life cycle characteristics.

### BRIEF DESCRIPTION OF THE DRAWINGS

FIG. 1 is a schematic diagram showing a negative electrode for a rechargeable lithium battery according to one or more embodiments of the present disclosure.
FIG. 2 - FIG. 5 are each a schematic view illustrating a rechargeable lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, and when a definition is not otherwise provided, it will be understood that when an element such as a layer, film, region, or substrate is referred to as being "on" another element, it may be directly on the other element or one or more intervening elements may also be present. In addition, it will also be understood that when an element or layer is referred to as being "between" two elements or layers, it can be the only element or layer between the two elements or layers, or one or more intervening elements or layers may also be present.

As used herein, the singular forms "a," "an" and "the" are intended to include the plural forms as well, unless the context clearly indicates otherwise. Unless otherwise specified, "A or B" may indicate "includes A, includes B, or includes A and B". Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the term "combination thereof' may include a mixture, a laminate, a complex, a copolymer, an alloy, a blend, and/or a reactant of constituents.

In the present disclosure, when particles are spherical, "diameter" indicates a particle diameter or an average particle diameter, and when the particles are non-spherical, the "diameter" indicates a major axis length or an average major axis length. Such a particle diameter indicates an average particle diameter (D50) where D50 refers to the average diameter (size) of particles whose cumulative volume corresponds to 50 vol% in the particle diameter distribution (e.g., cumulative distribution), and refers to the value of the particle diameter corresponding to 50% from the smallest particle when the total number of particles is 100% in the distribution curve accumulated in the order of the smallest particle diameter to the largest particle diameter. The average particle diameter (D50) may be measured by a method generally available and/or suitable to those skilled in the art, for example, by a particle size analyzer, or by a transmission electron microscopic image, or a scanning electron microscopic image. In one or more embodiments, a dynamic light-scattering measurement device is used to perform a data analysis, and the number of particles is counted for each particle size range, and from this, the average particle diameter (D50) value may be easily obtained through calculation. The particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device.

It will be further understood that the terms "comprises," "comprising," "includes," "including," "have," and "having" when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

Spatially relative terms, such as "top," "bottom," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as on "top" of other elements or features would then be oriented on the "bottom" of the other elements or features. Thus, the example term "top" can encompass both an orientation of above and below. The device may be otherwise oriented (e.g., rotated 90 degrees or at other orientations) and the spatially relative descriptors used herein should be interpreted accordingly.

A negative electrode for a rechargeable lithium battery according to one or more embodiments includes a current collector and a negative active material layer, and this negative active material layer includes (*e.g*., consists of) three layers: a first active material layer, a second active material layer, and a third active material layer.

The negative active material layer according to one or more embodiments includes (*e.g*., consists of) a three-layer structure, including a first layer in contact with the current collector, a third layer on a surface, and a second layer between the first layer and the third layer. The first layer and the third layer are a first crystalline carbon layer and a second crystalline carbon layer in which negative active material is crystalline carbon, and the second layer is a silicon layer including a Si-carbon composite as an active material.

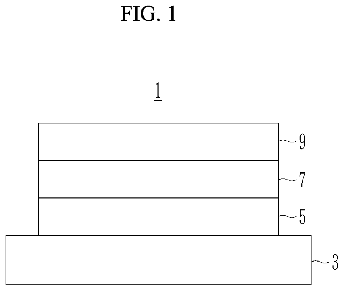

If (*e.g*., when) such a negative electrode is illustrated in more detail, with reference to FIG. 1, then the negative electrode 1 according to one or more embodiments includes a silicon layer 7 between a first crystalline carbon layer 5 and a second crystalline carbon layer 9. For example, the silicon layer 7 is included in the negative electrode as a middle layer, the first crystalline carbon layer 5 is included in direct contact with the current collector 3 and the second crystalline carbon layer 9 is positioned on the surface (*e.g*., the surface of the negative electrode 1 opposite the current collector 3).

In one or more embodiments, the first crystalline carbon layer and the second crystalline carbon layer are active material layers in which the active material is crystalline carbon.

The crystalline carbon may be graphite such as an unspecified shaped, sheet shaped, flake shaped, spherical shaped or fiber-shaped natural graphite and/or artificial graphite.

In one or more embodiments, the first crystalline carbon and the second crystalline carbon may be artificial graphite, natural graphite, or any suitable mixture thereof, and according to one or more embodiments, the first crystalline carbon and the second crystalline carbon may be any suitable mixture of artificial graphite and natural graphite.

In one or more embodiments, the silicon layer includes a Si-carbon composite as an active material and may further include a crystalline carbon.

The inclusion of the Si-carbon composite in the silicon layer may enhance capacity, and as the Si-carbon composite is positioned as the middle layer, the first active material layer and the third active material layer, positioned on the top and the bottom, respectively, may be able to absorb the volume expansion of Si occurring during charge and discharge, thereby maintaining the entire volume of the negative active material layer. For example, such volume expansion suppressing effects may be more effectively realized in crystalline carbon as the active material of the first active material layer and the third active material layer, which has low hardness compared to amorphous carbon or a mixture of amorphous carbon and crystalline carbon, to have the benefit and/or advantage of elasticity.

In the negative electrode according to one or more embodiments, a thickness percentage of the silicon layer is about 3% to about 35% based on the total thickness of the negative active material layer. In one or more embodiments, the thickness% of the silicon layer may be about 5% to about 33%, or about 12% to about 30% based on the total thickness of the negative active material layer.

If (*e.g*., when) the thickness of the silicon layer is within the above ranges, then relatively high capacity due to the inclusion of the Si-C composite may be achieved, and the volume expansion of the silicon layer may be effectively (or substantially effectively) absorbed by the first crystalline carbon layer and the second crystalline carbon layer, serving as an effective (or substantially effective) buffer. Thus, the volume expansion of the electrode may be effectively suppressed or reduced, resulting in improvement in the cycle-life characteristics. If (*e.g*., when) the thickness% of the silicon layer is less than about 3%, then the capacity of the rechargeable lithium battery may be reduced. If (*e.g*., when) the thickness% of the silicon layer is more than about 35%, then the thicknesses of the first crystalline carbon layer and the second crystalline carbon layer are relatively thin, and may be insufficient to absorb the volume expansion.

If (*e.g*., when) the silicon layer is positioned to be in contact the current collector, for example, if (*e.g*., when) the silicon layer corresponds to a first layer, then the effect of suppressing volume expansion may be obtained, but it may increase resistance due to the direct contact between the current collector and silicon. If (*e.g*., when) the silicon layer is positioned on the surface of the negative electrode (*e.g*., the surface of the negative electrode opposite the surface in contact with the current collector), for example, the silicon layer corresponds to a third layer, then the position of the silicon layer is on the crystalline carbon layer (*e.g*., instead of between crystalline carbon layers) which acts as a buffer for absorbing the volume expansion, and thus, the effects for suppressing the volume expansion may be not sufficient.

In one or more embodiments, the thickness of the silicon layer may be about 10 µm to about 85 µm, about 15 µm to about 70 µm, about 15 µm to about 50 µm, or about 20 µm to about 50 µm.

The thickness of the first crystalline carbon layer 5 may be about 10 µm to about 120 µm, about 20 µm to about 100 µm, or about 30 µm to about 80 µm.

The thickness of the second crystalline carbon layer 9 may be about 10 µm to about 120 µm, about 20 µm to about 100 µm, or about 30 µm to about 80 µm.

While the silicon layer 7, the first crystalline carbon layer 5, and the second crystalline carbon layer 9 satisfy the thickness%, for example, if (*e.g*., when) the thickness of each layer satisfies the above ranges, then the buffer action of absorbing the expansion of the silicon layer with the carbon layer may be more sufficiently realized, thereby more effectively controlled or selected.

In the negative electrode according to one or more embodiments, the silicon-carbon composite included in the second active material layer (*e.g*., the silicon layer 7) may include silicon particles and a carbon-based material. The silicon particles may be silicon nano particles. The carbon-based material may be amorphous carbon, or may be amorphous carbon and crystalline carbon.

In one or more embodiments, the silicon-carbon composite may include silicon nano particles and an amorphous carbon coating layer on the surface of the silicon nano particles.

The silicon-carbon composite may also include an agglomerated product where silicon nano particles are agglomerated and an amorphous carbon coating layer is on the surface of the agglomerated product. That is, the Si-carbon composite may include a secondary particle in which silicon primary particles (*e.g*., silicon nano particles) are agglomerated, and the amorphous carbon may be on the primary particles and the secondary particle. For example, the Si-carbon composite may be in a form of secondary particles in (*e.g*., each of) which silicon primary particles are agglomerated.

The silicon nano particles may have a particle diameter (*e.g*., an average particle diameter) of about 10 nm to about 1,000 nm, and according to one or more embodiments, may be about 10 nm to about 200 nm, or about 20 nm to about 150 nm. If (*e.g*., when) the average particle diameter of the silicon nano particles is within the above ranges, then the excessive volume expansion caused during charge and discharge may be suppressed or reduced, and a breakage of the conductive path due to crushing of particles may be prevented or reduced.

In the amorphous carbon coating layer, amorphous carbon may include soft carbon, hard carbon, mesophase pitch carbide, sintered coke, or any suitable combination thereof. The thickness of the amorphous carbon coating layer may be about 1 nm to about 2 µm, about 1 nm to about 500 nm, about 10 nm to about 300 nm, or about 20 nm to about 200 nm. If (*e.g*., when) the thickness of the amorphous carbon coating layer is within the above ranges, then the volume expansion of silicon may be better suppressed or reduced during charging and discharging.

The silicon-carbon composite may further include crystalline carbon. If (*e.g*., when) the silicon-carbon composite further includes crystalline carbon, then it may include an agglomerated product where silicon nano particles and crystalline carbon are agglomerated and an amorphous carbon coating layer on the surface of the agglomerated product.

The crystalline carbon may include an unspecified shaped, sheet shaped, flake shaped, spherical shaped or fiber-shaped natural graphite or artificial graphite, or any suitable combination thereof.

If (*e.g*., when) the silicon-carbon composite includes silicon nano particles and an amorphous carbon coating layer, then an amount of the silicon nano particles may be about 30 wt% to about 70 wt%, or about 40 wt% to about 65 wt% based on the total 100 wt% of the silicon-carbon composite. An amount of the amorphous carbon coating layer may be about 30 wt% to about 70 wt%, or about 35 wt% to about 60 wt% based on the total 100 wt% of the silicon-carbon composite.

If (*e.g*., when) the silicon-carbon composite further includes crystalline carbon, then an amount of the silicon nano particles may be about 20 wt% to about 70 wt% or about 25 wt% to about 65 wt% based on the total 100 wt% of the silicon-carbon composite. Based on the total 100 wt% of the silicon-carbon composite, an amount of the amorphous carbon may be about 25 wt% to about 70 wt% or about 25 wt% to about 60 wt%, and an amount of crystalline carbon may be about 1 wt% to about 20 wt%, or about 5 wt% to about 15 wt%.

The amorphous carbon may be soft carbon, hard carbon, mesophase pitch carbide, sintered coke, or any suitable combination thereof.

In one or more embodiments, the second active material layer (*e.g*., the silicon layer 7) may further include crystalline carbon. For example, the second active material layer may include the silicon-carbon composite together with crystalline carbon as a negative active material. A mixing ratio of the silicon-carbon composite and the crystalline carbon may be about 9:91 to about 60:40 by a weight ratio, about 9:91 to about 50:50 by a weight ratio, about 9:91 to about 95:5 by a weight ratio, about 9:91 to about 90:10 by a weight ratio, about 80:20 to about 95:5 by a weight ratio, or about 90:10 to about 95:5 by a weight ratio. If (*e.g.*, when) the mixing ratio of the silicon-carbon composite and crystalline carbon is within the above ranges, then a higher capacity may be obtained.

The first active material layer (*e.g*., the first crystalline carbon layer 5), the second active material layer (*e.g*., the silicon layer 7), and the third active material layer (*e.g*., the second crystalline carbon layer 9) may respectively include a binder, and may further include a conductive material.

In the first active material layer, the second active material layer, and the third active material layer, an amount of negative active material in each may be about 90 wt% to about 99 wt%, or about 94 wt% to about 99 wt%.

In the first active material layer, the second active material layer, and the third active material layer, an amount of the binder in each may be about 0.5 wt% to about 5 wt%, or about 0.5 wt% to about 3 wt% based on the total 100 wt% of each respective active material layer. In the first active material layer, the second active material layer, and the third active material, an amount of the conductive material in each may be about 0.5 wt% to about 5 wt% or about 0.5 wt% to about 3 wt% based on the total 100 wt% of each respective active material layer.

The binder may serve to attach the negative electrode active material particles to each other and also to attach the negative electrode active material to the current collector. The binder may include a non-aqueous binder, an aqueous binder, or any suitable combination thereof.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or any suitable combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluorine rubber, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, a polyester resin, a (meth)acryl resin, a phenol resin, an epoxy resin, polyvinyl alcohol, or any suitable combination thereof.

The negative binder may include a cellulose-based compound, or may be the cellulose-based compound together with the aqueous binder. The cellulose-based compound may include one or more of carboxymethyl cellulose, hydroxypropyl methyl cellulose, methyl cellulose, or alkali metal salts thereof. The alkali metal may be Na, K, or Li. The cellulose-based compound may serve as a binder and may impart viscosity to serve as a thickener. Therefore, an amount of the cellulose-based compound may be appropriately adjusted within the amount of the binder, and it may be, for example, about 0.1 parts by weight to about 3 parts by weight based on 100 parts by weight of the negative active material.

The dry binder (*e.g.*, the non-aqueous binder) may be a polymer that is capable of being fibrous. For example, the dry binder may be polytetrafluoroethylene, polyvinylidene fluoride, a polyvinylidene fluoride-hexafluoropropylene copolymer, polyethylene oxide or any suitable combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or any suitable mixture thereof.

The current collector may include one of (*e.g*., one selected from among) a copper foil, a nickel foil, a stainless steel foil, a titanium foil, a nickel foam, a copper foam, a polymer substrate coated with a conductive metal, and/or any suitable combination thereof, but the present disclosure is not limited thereto.

### Rechargeable lithium battery

One or more embodiments of the present disclosure provide a rechargeable lithium battery including the negative electrode according to one or more embodiments, a positive electrode, and an electrolyte.

### Positive electrode

The positive electrode may include a current collector and a positive active material layer on the current collector.

The positive active material layer may include a positive active material and may further include a binder and/or a conductive material. For example, the positive electrode may further include an additive that may serve as a sacrificial positive electrode.

The positive active material may include a compound (lithiated intercalation compound) that is capable of intercalating and deintercalating lithium. In one or more embodiments, at least one of a composite oxide of lithium and a metal of (*e.g*., a metal selected from among) cobalt, manganese, nickel, and/or any suitable combination thereof may be utilized.

The composite oxide may be a lithium transition metal composite oxide. Examples of the composite oxide may include a lithium nickel-based oxide, lithium cobalt-based oxide, lithium manganese-based oxide, lithium iron phosphate-based compound, cobalt-free nickel-manganese-based oxide, or any suitable combination thereof.

As an example, the following compounds represented by any one of the following Chemical Formulas may be utilized: LiₐA_{1-b}X_{b}O_{2-c}D_{c} (0.90≤a≤1.8, 0≤b≤0.5, 0 ≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤ 0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤ 1.8).

In the above Chemical Formulas, A is Ni, Co, Mn, or any suitable combination thereof; X is Al, Ni, Co, Mn, Cr, Fe, Mg, Sr, V, a rare earth element or any suitable combination thereof; D is O, F, S, P, or any suitable combination thereof; G is Al, Cr, Mn, Fe, Mg, La, Ce, Sr, V, or any suitable combination thereof; and L¹ is Mn, Al, or any suitable combination thereof.

The positive active material may be, for example, a high nickel-based positive active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metals excluding lithium in the lithium transition metal composite oxide. The high nickel-based positive active material may be capable of realizing high capacity and may be applied to a high-capacity, high-density rechargeable lithium battery.

In the positive electrode, an amount of the positive active material may be about 90 wt% to about 98 wt% based on the total weight of the positive active material layer. Amounts of the binder and the conductive material may each be about 0.5 wt% to about 5 wt% based on 100 wt% of the positive active material layer.

The binder serves to attach the positive active material particles to each other and also to attach the positive electrode active material to the current collector.

Examples of the binder may include polyvinyl alcohol, carboxymethylcellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene butadiene rubber, (meth)acrylated styrene-butadiene rubber, an epoxy resin, (meth)acrylic resin, a polyester resin, nylon, and/or the like, as non-limiting examples.

The conductive material may be utilized to impart conductivity (*e.g*., electrical conductivity) to the electrode. Any material that does not cause chemical change (*e.g*., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and/or carbon nanotube; a metal-based material containing copper, nickel, aluminium, silver, etc., in a form of a metal powder or a metal fiber; a conductive polymer such as a polyphenylene derivative; or any suitable mixture thereof.

Al may be utilized as the current collector, but the present disclosure is not limited thereto.

### Electrolyte

The electrolyte includes a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, alcohol-based solvent, an aprotic solvent, or any suitable combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be utilized alone or in combination of two or more.

In one or more embodiments, if (*e.g*., when) utilizing a carbonate-based solvent, then a cyclic carbonate and a chain carbonate may be mixed and utilized, and the cyclic carbonate and the chain carbonate may be mixed in a volume ratio of about 1:1 to about 1:9.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one of (*e.g*., at least one selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBP), and/or lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or any suitable combination thereof on one or both (*e.g*., opposite) surfaces of the porous substrate.

The porous substrate may be a polymer film formed of any one of (*e.g*., any one selected from among) a polyolefin such as polyethylene and polypropylene, a polyester such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalate, a glass fiber, TEFLON, and polytetrafluoroethylene, or a copolymer or any suitable mixture of two or more thereof.

The organic material may include a polyvinylidene fluoride-based polymer or a (meth)acrylic polymer.

The inorganic material may include inorganic particles of (*e.g*., selected from among) Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or any suitable combination thereof, but the present disclosure is not limited thereto.

The organic material and the inorganic material may be mixed in one coating layer, or a coating layer including an organic material and a coating layer including an inorganic material may be stacked.

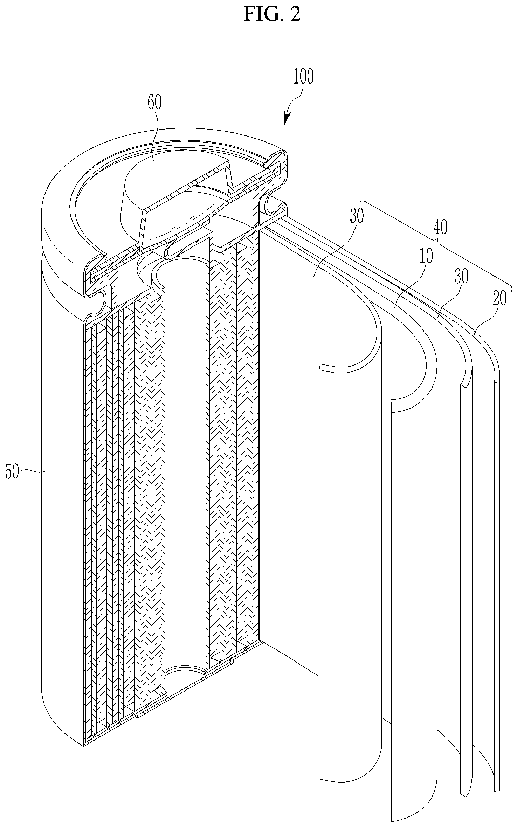

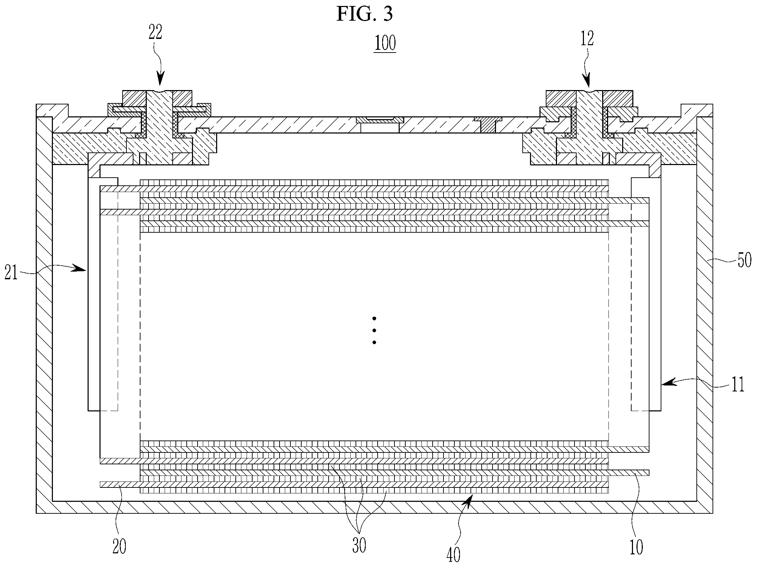

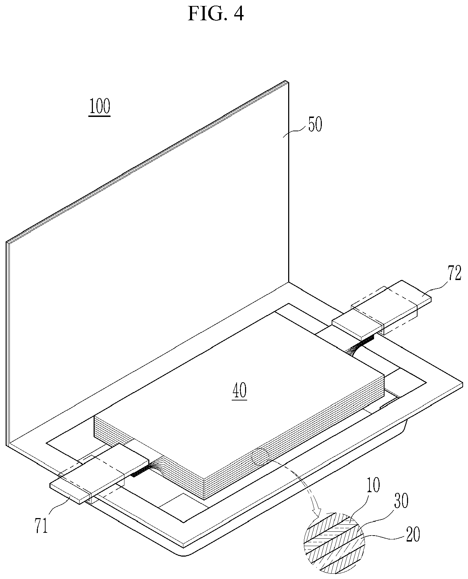

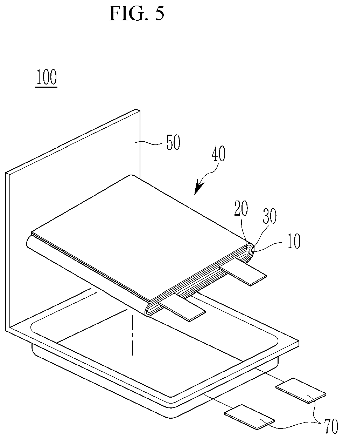

The rechargeable lithium battery may be classified into cylindrical, prismatic, pouch, or coin-type or kind batteries, and/or the like depending on their shape. FIGs. 2 to 5 are schematic views illustrating a rechargeable lithium battery according to embodiments of the present disclosure. FIG. 2 shows a cylindrical battery, FIG. 3 shows a prismatic battery, and FIG. 4 and FIG. 5 show pouch-type or kind batteries. Referring to FIGs. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown, for example, in FIG. 2. In FIG. 3, the rechargeable lithium battery 100 may include a positive lead tab 11, a positive terminal 12, a negative lead tab 21, and a negative terminal 22. As shown in FIG. 4 and FIG. 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The following Examples and Comparative Examples are provided in order to highlight characteristics of one or more embodiments, but it will be understood that the Examples and Comparative Examples are not to be construed as limiting the scope of the present disclosure. Further, it will be understood that the embodiments are not limited to the particular details described in the Examples and Comparative Examples. The Examples below are only example embodiments are the present disclosure is not limited to the Examples below.

### Example 1

97.46 wt% of a mixture of natural graphite and artificial graphite (a mixing ratio of natural graphite and artificial graphite being 50:50 by weight ratio), 1.7 wt% of a styrene-butadiene rubber, 0.8 wt% of carboxymethyl cellulose, and 0.04 wt% of single walled carbon nano tubes (SWCNT) were mixed in a water solvent to prepare a first crystalline carbon layer slurry.

80 wt% of a silicon-carbon composite, 17.46 wt% of artificial graphite, 1.7 wt% of a styrene-butadiene rubber, 0.8 wt% of carboxymethyl cellulose, and 0.04 wt% of single-walled carbon nano tubes (SWCNT) were mixed in a water solution to prepare a slurry for a silicon layer.

The silicon-carbon composite including an agglomerated product where silicon nano particles with an average particle diameter (D50) of 100 nm and soft carbon were agglomerated, and a soft carbon coating layer on the agglomerated product was utilized. Based on the total weight of the silicon-carbon composite, an amount of the silicon nano particles was 54 wt% and an amount of the soft carbon was 46 wt%, and a thickness of the soft carbon coating layer was 100 nm.

97.46 wt% of a mixture of natural graphite and artificial graphite (a mixing ratio of natural graphite and artificial graphite being 50:50 by weight ratio), 1.7 wt% of a styrene-butadiene rubber, 0.8 wt% of carboxymethyl cellulose, and 0.04 wt% of single-walled carbon nanotubes (SWCNT) were mixed in a water solvent to prepare a second crystalline carbon layer slurry.

On a Cu foil current collector, the first crystalline carbon layer slurry, the silicon layer slurry and the second crystalline carbon layer slurry were sequentially coated and dried followed by pressurizing to prepare a negative electrode in which the first crystalline carbon layer (thickness: 42.5 µm), the silicon layer (thickness: 15 µm), and the second crystalline carbon layer (thickness: 42.5 µm) were sequentially formed on the current collector.

97.8 wt% of a LiNi_{0.91}Co_{0.07}Mn_{0.01}Al_{0.01}O₂ positive active material, 1.1 wt% of a carbon conductive material, and 1.1 wt% of a polyvinylidene fluoride binder were mixed in an N-methyl pyrrolidone solvent to prepare a positive active material layer slurry.

The positive active material layer slurry was coated on an Al foil current collector, dried, and pressurized to prepare a positive electrode.

Utilizing the negative electrode, the positive electrode, and an electrolyte, a full-cell was fabricated. The electrolyte was prepared by dissolving 1.5 M LiPF₆ in ethylene carbonate, ethyl methyl carbonate, and dimethyl carbonate (20:10:70 by volume ratio).

### Example 2

The first crystalline carbon layer slurry prepared in Example 1, the silicon layer slurry prepared in Example 1, and the second crystalline carbon layer slurry prepared in Example 1, were utilized to prepare a negative electrode with the first crystalline carbon layer having a thickness of 15 µm, the silicon layer having a thickness of 15 µm, and the second crystalline carbon layer having a thickness of 70 µm on the current collector by substantially the same procedure in Example 1.

Utilizing the negative electrode, a full cell was fabricated by substantially the same procedure as in Example 1.

### Example 3

The first crystalline carbon layer slurry prepared in Example 1, the silicon layer slurry prepared in Example 1, and the second crystalline carbon layer slurry prepared by Example 1, were utilized to prepare a negative electrode with the first crystalline carbon layer having a thickness of 70 µm, the silicon layer having a thickness of 15 µm, and the second crystalline carbon layer having a thickness of 15 µm on the current collector by substantially the same procedure in Example 1.

Utilizing the negative electrode, a full cell was fabricated by substantially the same procedure as in Example 1.

### Comparative Example 1

The silicon layer slurry prepared in Example 1 was coated on the Cu foil current collector, dried, and pressurized to prepare a negative electrode including a silicon layer with a thickness of 100 µm.

Utilizing the negative electrode, a full cell was fabricated by substantially the same procedure as in Example 1.

### Comparative Example 2

The first crystalline carbon layer slurry prepared in Example 1, the second crystalline carbon layer slurry prepared by Example 1, and the silicon layer slurry prepared by Example 1 were sequentially coated on the Cu foil current collector and dried followed by pressurizing to prepare a negative electrode with the first crystalline carbon layer (thickness: 42.5 µm), the second crystalline carbon layer (thickness: 42.5 µm), and the silicon layer (thickness: 15 µm) sequentially formed on the current collector.

Utilizing the negative electrode, a full cell was fabricated by substantially the same procedure as in Example 1.

### Comparative Example 3

The silicon layer slurry prepared in Example 1, the first crystalline carbon layer slurry prepared by Example 1, and the second crystalline layer slurry prepared by Example 1 were sequentially coated on the Cu foil current collector and dried followed by pressurizing to prepare a negative electrode with the silicon layer (thickness: 15 µm), the first crystalline carbon layer (thickness: 42.5 µm), and the second crystalline carbon layer (thickness: 42.5 µm) sequentially formed on the current collector.

Utilizing the negative electrode, a full cell was fabricated by substantially the same procedure as in Example 1.

### Comparative Example 4

The first crystalline carbon layer slurry prepared in Example 1, the silicon layer slurry prepared by Example 1, and the second crystalline carbon layer slurry prepared by Example 1 were utilized to prepare a negative electrode with the first crystalline carbon layer (thickness: 45 µm), the silicon layer (thickness: 10 µm), and the second crystalline carbon layer (thickness: 45 µm) sequentially formed on the current collector.

Utilizing the negative electrode, a full cell was fabricated by substantially the same procedure as in Example 1.

### Comparative Example 5

The first crystalline carbon layer slurry prepared in Example 1, the silicon layer slurry prepared by Example 1, and the second crystalline carbon layer slurry prepared by Example 1 were utilized to prepare a negative electrode with the first crystalline carbon layer (thickness: 32 µm), the silicon layer (thickness: 36 µm), and the second crystalline carbon layer (thickness: 32 µm) sequentially formed on the current collector.

Utilizing the negative electrode, a full cell was fabricated by substantially the same procedure as in Example 1.

### Experimental Example 1) Evaluation of room temperature cycle-life

The full-cells according to Examples 1 to 3 and Comparative Examples 1 to 5 were charged and discharged at a room temperature (25 °C, RT) under the following conditions for 70 cycles. A ratio of the discharge capacity at each cycle relative to the discharge capacity at first cycle was measured. The results are shown in Table 1.

Charge: constant current/constant voltage, 0.5 C, 4.25 V, 0.05 C cut-off, pause for 10 minutes

Discharge: constant current 0.5 C, 2.8 V cut-off, pause for 10 minutes

**Table 1**

| | Thickness% of silicon layer | Capacity retention (%) |
|---|---|---|
| Example 1 | 15 | 85 |
| Example 2 | 15 | 83 |
| Example 3 | 15 | 82 |
| Comparative Example 1 | - | 80 |
| Comparative Example 2 | 15 | 70 |
| Comparative Example 3 | 15 | 78 |
| Comparative Example 4 | 10 | 80 |
| Comparative Example 5 | 36 | 75 |

As shown in Table 1, the cells of Examples 1 to 3 where the silicon layer was positioned as a middle layer, for example, in a center, and thickness% of the silicon layer was 15% based on the total thickness of the negative active material layer, exhibited excellent or suitable capacity retention.

Whereas, if (*e.g*., when) the silicon layer was not included (Comparative Example 1), or the silicon layer was positioned on the top (Comparative Example 2) or the bottom (Comparative Example 3), then capacity retention was significantly deteriorated. Even though the silicon layer was positioned in the middle, for example, at the center, it was found that the capacity retention was deteriorated if (*e.g*., when) the thickness% of the silicon layer was too small (Comparative Example 4) or too large (Comparative Example 5).

For example, Comparative Examples 1 to 5 showed a capacity retention of 80% or less which is not suitable for use as a battery. Thus, the cells of Comparative Examples 1 to 5 are not suitable to be applied as actual cells.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

## Claims

1. A negative electrode for a rechargeable lithium battery, the negative electrode comprising:
a current collector; and
a negative active material layer on at least one surface of the current collector,
wherein the negative active material layer comprises:
a first crystalline carbon layer in contact with the current collector,
a silicon layer on the first crystalline carbon layer and comprising a Si-carbon composite, and
a second crystalline carbon layer on the silicon layer, and
wherein a thickness of the silicon layer is about 3% to about 35% based on a total thickness of the negative active material layer.

2. The negative electrode as claimed in claim 1, wherein the thickness of the silicon layer is about 5% to about 33% based on the total thickness of the negative active material layer.

3. The negative electrode as claimed in claim 1 or claim 2, wherein the silicon layer has a thickness of about 10 µm to about 85 µm.

4. The negative electrode as claimed in any one of claims 1 to 3, wherein the first crystalline carbon layer has a thickness of about 10 µm to about 120 µm.

5. The negative electrode as claimed in any one of claims 1 to 4, wherein the second crystalline carbon layer has a thickness of about 10 µm to about 120 µm.

6. The negative electrode as claimed in any one of claims 1 to 5, wherein the first crystalline carbon layer and the second crystalline carbon layer each comprise artificial graphite, natural graphite, or a mixture thereof.

7. The negative electrode as claimed in any one of claims 1 to 6, wherein the silicon layer further comprises crystalline carbon.

8. The negative electrode as claimed in claim 7, wherein the silicon layer comprises the Si-carbon composite and the crystalline carbon at a weight ratio of about 9:91 to about 90:10.

9. The negative electrode as claimed in any one of claims 1 to 8, wherein the Si-carbon composite comprises silicon nano particles and amorphous carbon.

10. The negative electrode as claimed in any one of claims 1 to 9, wherein the Si-carbon composite comprises a secondary particle in which silicon primary particles are agglomerated, and amorphous carbon is on the primary particles and the secondary particle.

11. The negative electrode as claimed in claim 9 or claim 10, wherein the Si-carbon composite further comprises crystalline carbon.

12. The negative electrode as claimed in claim 10 or claim 11, wherein the secondary particle further comprises crystalline carbon.

13. A rechargeable lithium battery, comprising:
the negative electrode as claimed in claim 1 to claim 12;
a positive electrode comprising a positive active material; and
a non-aqueous electrolyte.
